# EUROPEAN PATENT APPLICATION

(11) **EP 4 534 491 A1**
(43) Date of publication of application: **09.04.2025**
(21) Application number: 23811564.6
(22) Date of filing: 01.05.2023
(51) Int. Cl.: C03B 37/012, G02B 6/02

(54) **MOLDED ARTICLE PRODUCTION DEVICE**

(30) Priority: 25.05.2022 JP 2022084973
(71) Applicant: Kohoku Kogyo Co., Ltd., Nagahama-shi, Shiga 529-0241 (JP)
(72) Inventor: ARAKI, Haruhito, Nagahama-shi, Shiga 529-0241 (JP); TAKAMURA, Kazumasa, Nagahama-shi, Shiga 529-0241 (JP); YAMAMOTO, Jun, Nagahama-shi, Shiga 529-0241 (JP); NAKAYAMA, Tatsuo, Nagahama-shi, Shiga 529-0241 (JP); TAKAHASHI, Masaya, Nagahama-shi, Shiga 529-0241 (JP)
(74) Representative: Patentwerk B.V.
(86) International application number: PCT/JP2023/016997
(87) International publication number: WO 2023/228686

(57) **Abstract**

**[Problem]** Manufacturing a molded body with high precision for forming a photonic crystal fiber.

**[Solution]** In the molded body manufacturing equipment, the mold 20 is fixed at an incline to the movable beam 14 of the frame 10. A fixed pulley 30 and a wire straightening pulley 40 are fixed to the movable beam 14 as a mechanism for fixing multiple wires 60 that form holes in the molded body. One end of the wire 60 is fixed to a wire fixing unit 15 provided on the frame. The other end passes through the fixed side pulley 30, passes through the mold 20, passes through the wire straightening pulley 40 and the direction changing pulley 50, and has a weight 70 attached thereto.

In this way, tension is applied to the wire 60 by the gravity of the weight 70, allowing the wire 60 to maintain its straightness even inside the mold 20, making it possible to manufacture molded bodies with high precision.

## Description

### [Technical Field]

The present invention relates to a technique for manufacturing a molded body having multiple holes for forming a photonic crystal fiber, or the like.

### [Background]

With the development of optical fibers, photonic crystal fibers, which have a structure in which holes and high refractive index glass are regularly arranged in the cross section of the optical fiber, have become known. In recent years, in order to improve the performance of photonic crystal fibers, there has been a trend toward making the diameter and spacing of holes finer and providing many holes over the entire surface of the cladding portion. Photonic crystal fibers are manufactured using molded bodies with holes.

The following prior art is known as a method for producing molded bodies with such holes.

For example, Patent Literature 1 discloses a technique for producing a molded body for a photonic crystal fiber by stringing metal wires in a predetermined arrangement inside a container made of a metal tube, pouring a solution for forming a molded body into the container, drying and hardening the solution, and then removing the metal wires and metal tube.

Patent Literature 2 discloses a technique in which an upper holding fixture having an array of rod-shaped elongated members is placed from above a cylindrical container, and a lower holding fixture having a similar array of rod-shaped elongated members is placed from below, and a sol is introduced into the container to solidify it to form a gel, and then the sol is removed from the container and converted into a molded body.

### [Prior Art Document]

### [Patent Literature]

**[Patent Literature 1]** WO2013/31484A
**[Patent Literature 2]** JP 3895562A

### [Summary]

### [Technical Problem]

However, in these prior arts, although conceptual manufacturing methods for molded bodies for photonic crystal fibers are shown, there is no disclosure of the specific equipment used for manufacturing the molded bodies. In particular, in order to manufacture molded bodies for photonic crystal fibers, which have recently become commonplace in terms of extremely fine structures, the prior art requires precise arrangement of metal wires or elongated members, but there has been no disclosure as to how such arrangement can be achieved. This problem is not limited to photonic crystal fibers, but is a common problem when manufacturing a molded body having multiple holes.

In view of the above problems, the object of the present invention is to provide a technique that enables accurate manufacture of a molded body having multiple holes for forming a photonic crystal fiber, or the like.

### [Solution to Problem]

The present invention can be configured to be a molded body manufacturing equipment for manufacturing molded bodies comprising:
a frame;
a mold for forming a molded body fixed to the frame;
and a wire holding mechanism that holds a wire passing through the mold,
wherein the mold has a plate-shaped guide attached to a portion corresponding to each end of the molded body and having a through hole for the wire to pass through, and an inlet for injecting the solution forming the molded body into the mold;
wherein the wire holding mechanism adds a predetermined tension to the wire that holds the wire in a straight.

According to the molded body manufacturing equipment of the present invention, a molded body having holes that can be used to form photonic crystal fibers, or the like can be manufactured by pouring a solution into a mold with a wire passing therethrough.

In this case, in the present invention, the position of the wire can be regulated by the through hole, and a predetermined tension can be applied to the wire to maintain its straightness. In order to manufacture molded bodies with high precision, it is important that the straightness of the wire is maintained within the mold, and when multiple wires are used, that the diameter of each wire is maintained as designed. For this purpose, it is necessary to add a predetermined tension to each wire.

In the prior art, although the formation of holes using a wire is disclosed, the above-mentioned point is not fully disclosed. Rather, only a manufacturing method was disclosed that was based on the assumption that straightness and the designed diameter would be maintained without any special consideration to the wire.

However, in recent years, there has been a demand for the holes formed in the molded body to be extremely fine and dense, and naturally the wires used in the manufacturing process also need to be thin in diameter. As a result, it has become essential to consider ways of maintaining the straightness of the wire and its diameter as designed. The present invention was made in consideration of the importance of this problem.

Therefore, according to the molded body manufacturing equipment of the present invention, it is possible to manufacture molded bodies with high precision by applying a predetermined tension to the wire.

In the present invention, the number and arrangement of the wires can be determined arbitrarily.

The material of the wire can also be determined arbitrarily. Generally, metal such as stainless steel is used, but the material is not limited to this, and synthetic fibers, resins, or the like can also be used. However, in order to maintain the precision of the molded body, it is preferable to select a material that does not cause a significant change in wire diameter due to tension.

The molded body is a columnar material made of glass, resin, or the like, used to form an optical fiber, and correspond to a preform in a broad sense. However, the term preform is ambiguous because it can also refer, in the narrow sense, to a material that has undergone various processes and is in a state immediately before being drawn into optical fiber. Therefore, in this invention, the term molded body is used to include columnar materials that have not undergone such processes.

The solution used to form the molded body may be a slurry, a sol, or the like.

The wire holding mechanism may be any of a variety of mechanisms capable of applying tension to the wire. As described later, a mechanism using a weight, a mechanism for winding the wire, or a mechanism for pulling the wire may be used. A mechanism to measure the tension may also be used.

When multiple wires are used, tension can be applied to each wire individually, which has the advantage that the tension can be adjusted individually. Alternatively, multiple wires may be tensioned as a group or all of the wires may be tensioned at once, which has the advantage of making it easier to apply uniform tension to multiple wires.

The molded body manufacturing equipment of the present invention may be provided with a pulley arranged outside the mold for passing the wire, and a first adjustment mechanism for adjusting the relative position between the pulley and the mold.

By using a pulley in this manner, the position and direction of the wire on the outside of the guide of the mold can be adjusted, and interference between the wire and the through hole of the guide can be reduced. As a result, it is possible to prevent the tension applied by the wire holding mechanism from being hindered by the guide, thereby preventing the straightness of the wire from being damaged. In addition, it is possible to alleviate problems such as excessive tension being applied to the wire from the guide, which can cause unexpected deformation.

The first adjustment mechanism may be a mechanism for adjusting the relative position between the pulley and the mold in a normal direction to a bottom surface of the mold.

This embodiment makes it possible to adjust the position in the normal direction to the bottom surface of the mold, that is, the position in the height direction with the bottom surface of the mold as the reference. When the wire is held passing through the mold, by adjusting the height, it is possible to effectively reduce interference between the wire and the through hole in the guide. The inventor discovered that interference between the through hole and the wire in the height direction has a greater effect on the tension applied to the wire, and ultimately on the posture of the wire within the mold, than interference in the width direction (meaning the direction perpendicular to the height direction on the surface of the guide) between the through hole and the wire. Therefore, as described above, making the height adjustable makes it possible to effectively reduce adverse effects caused by interference between the wire and the through hole.

This does not exclude the embodiment that the first adjustment mechanism may be capable of adjusting the position in both the height direction and the width direction. However, a mechanism that can adjust only the height direction has the advantage of being less expensive than one that can adjust both the height and width directions. Also, there is a practical advantage in that adjustment in the height direction only is easier than adjustment in both the height and width directions.

In the present invention, sets of the first adjustment mechanism and the pulley may be respectively arranged on the outside of both ends of the mold.

This makes it possible to adjust the position and direction of the wire on both sides of the mold, thereby more effectively reducing interference between the through holes and the wire.

This does not exclude the possibility of providing the first adjustment mechanism and the pulley on only one side of the mold.

In the molded body manufacturing equipment of the present invention, the wire holding mechanism may include a fixing unit that fixes one end of the wire to the frame, and a hanging mechanism for applying the tension by hanging a weight on the other end of the wire.

As explained above, various mechanisms can be applied as a wire holding mechanism, but according to the above embodiment, since the tension is defined by the weight of the weight, there is an advantage that a constant tension can be applied relatively easily even when molded bodies are repeatedly manufactured. Furthermore, even when a molded body is manufactured using multiple wires, there is an advantage that a uniform tension can be applied relatively easily to the wires to which a uniform tension should be applied.

In the above embodiment, the weights do not necessarily have to be standardized to one weight. When the tension to be applied can be divided into multiple levels according to the wire, weights may be prepared according to the tension.

Furthermore, it is not necessary to use one weight for one wire, and one weight may be used for multiple wires. In this case, however, since the tension applied to the wires depends on the number of wires hanging one weight, the weight of the weight should be set considering the number of wires.

When a weight is used, the hanging mechanism may include a wire straightening pulley for maintaining the wire straight within the mold, and a direction changing pulley for changing the direction of the wire to a portion from which the weight is hung.

The mechanism for hanging the weight can take various forms, and the above embodiment is one of them. The wire passes through a wire straightening pulley and a direction changing pulley from the mold side, and then is attached to a weight. By using a wire straightening pulley in addition to the direction changing pulley for hanging the weight, it becomes possible to effectively maintain the straightness of the wire within the mold.

The wire straightening pulley may be provided with the first adjustment mechanism described above. This makes it possible to effectively reduce interference between the wire and the through hole of the guide.

The direction changing pulley does not have to be a single one, but may be configured by combining multiply pulleys.

In the above aspect, the direction changing pulley may include a second adjustment mechanism for adjusting a relative position with respect to the wire straightening pulley.

This makes it possible to adjust the relative positions of the direction changing pulley and the wire straightening pulley, thereby alleviate problems such as the wire being unable to adequately control its position and direction due to the wire floating away from the wire straightening pulley.

In a mechanism using a direction change pulley and a wire straightening pulley, two or more wire straightening pulleys may be provided in the direction in which the wire extends, and the wire may pass through the two wire straightening pulleys, from the side closest to the mold to the upper side and then to the lower side, before reaching the direction change pulley.

In the above embodiment, the wire that passes under the wire straightening pulley passes through the direction changing pulley. In this state, if the wire is redirected downwards by passing over the direction changing pulley, a weight can be hung from the end of the wire. This allows the position of the wire to be stabilized by the direction changing pulley and the wire straightening pulley.

In addition, the direction changing pulley may first change the direction of the wire upwards, and then change the direction downwards to hang the weight. In such a configuration, the wire may be configured to pass over the wire straightening pulley and then under the direction changing pulley.

In this way, by configuring the axes of the wire straightening pulley and the direction changing pulley to be located on opposite sides of the wire, the position of the wire can be stabilized.

In the molded body manufacturing equipment of the present invention, the frame holds the mold at an incline so that one end is lower and the other end is higher, and an inlet of the mold may be provided at the end held lower.

According to the above embodiment, the solution can be poured into the mold held inclined from the lower side. When manufacturing a molded body by pouring a solution, it is important to pour the solution into the mold without creating any cavity and to avoid the formation of air bubbles in the solution.

Through trial and error, the inventor discovered that cavities and air bubbles were likely to form when the solution was poured into the mold while it was held vertically or horizontally. In response to this, it was found that cavities and bubbles could be sufficiently suppressed by holding the mold inclined and slowly pouring the solution from the lower side.

According to the above embodiment, pouring in this manner can be realized, and defect-free molded bodies can be manufactured with good yield.

The position of the inlet can also be determined arbitrarily. It is not necessary to be strictly at the edge of the mold, but may be in the vicinity thereof.

In a mode in which the mold is held at an incline, the angle of inclination may be 45 degrees or less.

The angle of inclination can be determined arbitrarily taking into consideration the size of the molded body, the number and arrangement of the wires, the viscosity of the solution, etc., but the inventor has found through trial and error that an angle of 45 degrees or less is effective.

The angle of inclination may be adjustable.

It is not necessary that the present invention is provided with all the various features described above, but part of such features may appropriately be omitted or be provided in combination with other features.

Furthermore, the present invention may be configured not only as the above mentioned molded body manufacturing equipment, but also as a molded body manufacturing method as described below.

For example, a method for manufacturing a molded body comprising:
a step of fixing a mold for forming a molded body, the mold having a plate-shaped guide attached to portions corresponding to both end faces of the molded body and having a through hole for passing the wire through, and an inlet for pouring a solution forming the molded body into the mold, to a frame;
a step of holding the wire through the mold by applying a predetermined tension to hold the wire straight;
and a step of pouring the solution through the inlet and hardening the solution.

The above mentioned various features can be applied to such a method for producing a molded body.

### [Brief Description of Drawings]

Fig. 1 is a process diagram showing a molded body manufacturing process;
Fig. 2 is an explanatory diagram showing the overall configuration of a molded body manufacturing equipment;
Fig. 3 is an explanatory diagram showing a configuration of a mold;
Fig. 4 is an explanatory diagram showing the configuration of a fixed side pulley;
Fig. 5 is an explanatory diagram showing the configuration of a wire straightening pulley and a direction changing pulley; and
Fig. 6 is an explanatory diagram showing the positional relationship between a pulley and a mold.

### [Description of Embodiments]

Hereinafter, an embodiment in which a molded body having many holes is manufactured will be described, first with the manufacturing process being explained, and then a molded body manufacturing equipment for implementing the same being explained.

Hereinafter, molded body refers to a material for optical fiber obtained by hardening a slurry, and also correspond to preforms in a broad sense.

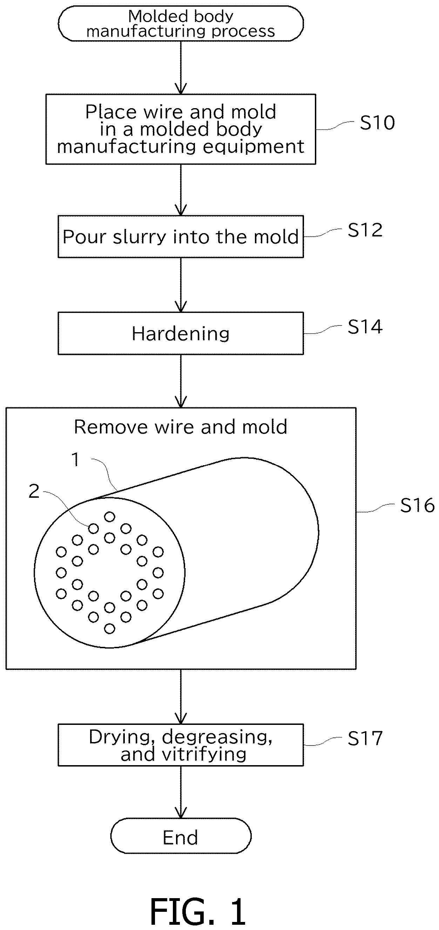

Fig. 1 is a process diagram showing a molded body manufacturing process.

First, an operator places a wire and a mold in a molded body manufacturing equipment described later (step S10). In this embodiment, the wire is attached applying tension so that it passes through the mold and remains straight.

Next, a slurry, which is a solution for forming a molded body, is poured from the inlet provided in the mold (step S12). The slurry can be composed of various components, and can be, for example, a solution containing silica glass powder, a hardening resin, a binder, and pure water. A sol may also be used.

After the slurry is poured in this manner, it is hardened in this state (step S14).

Thereafter, the wire and the mold are removed (step S16), thereby forming a hardened body 1 having a large number of holes 2 formed at positions corresponding to the wires, as shown in the figure. The hardened body 1 is then dried, degreased, and vitrified to form a molded body.

A molded body manufacturing equipment for manufacturing a molded body by the above mentioned steps will be described below.

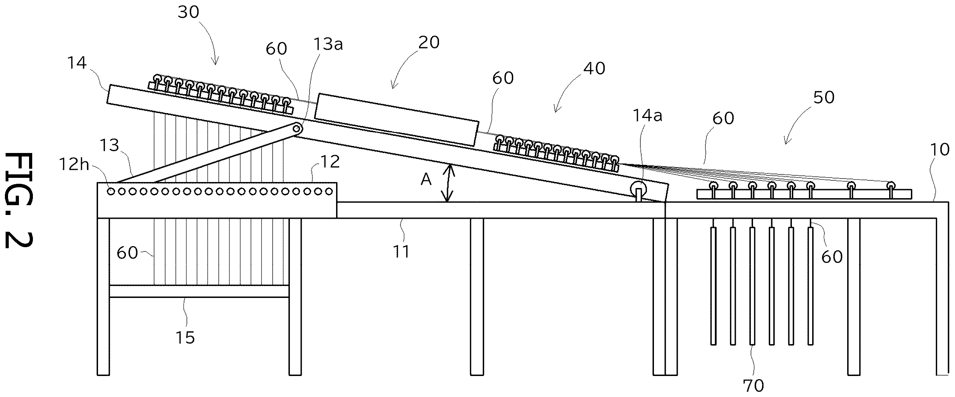

Fig. 2 is an explanatory diagram showing the overall configuration of a molded body manufacturing equipment. Shown in side view.

In the molded body manufacturing equipment, a mold 20 is fixed at an incline to a frame 10. The inclination angle A of the mold 20 can be changed by the mechanism described below.

On the frame 10, a horizontally disposed fixed beam 11 and a movable beam 14 are rotatably connected to each other by an axis 14a. A connecting beam 12 having multiple connecting holes 12h arranged in the horizontal direction is fixed to the fixed beam 11. The movable beam 14 is rotatably connected to the support 13 via an axis 13a. With this mechanism, the inclination can be changed by fixing the tip of the support 13 to any of the connecting holes 12h with a bolt or the like. Since the mold 20 is fixed on the movable beam 14, the inclination of the mold 20 can also be changed.

The inclination of the mold 20 may be appropriately selected depending on the size of the molded body, the number and arrangement of wires arranged in the mold, the viscosity of the slurry, or the like.

The mechanism for changing the inclination of the movable beam 14 is not limited to the one shown in the figure, and various other configurations can be applied, such as a mechanism that can continuously change the inclination. However, as described below, the molded body manufacturing equipment of this embodiment is capable of adjusting various parts in order to form molded bodies with high precision, so that the inclination angle of the movable beam 14 can be selectively changed, which has the advantage of being excellent in reproducibility, for example, when attempting to re-manufacture a molded body that was previously manufactured.

A fixed side pulley 30 and a wire straightening pulley 40 are fixed to the movable beam 14 as a mechanism for fixing the multiple wires 60 that form the holes 2, and further, a direction changing pulley 50 is fixed to the fixed beam 11. One end of the wire 60 is fixed to a wire fixing unit 15 provided on the frame below the fixed beam 11. The other end passes through the fixed side pulley 30, passes through the mold 20, passes through the wire straightening pulley 40 and the direction changing pulley 50, and has a weight 70 attached thereto. In this way, tension is applied to the wire 60 by the weight 70, and the wire 60 can maintain its straightness even inside the mold 20. Another advantage is that the use of the weight 70 makes it easy to apply a predetermined amount of tension to the wire 60. Furthermore, there is an advantage that the tension applied to the multiple wires 60 can be made uniform relatively easily.

In this embodiment, in order to precisely adjust the tension applied to the wire 60, one weight 70 is hung from one wire 60, but one weight 70 may be hung from multiple wires 60, or multiple weights 70 may be hung from one wire 60.

In addition, the fixed side pulley 30 and the wire straightening pulley 40 may be fixed individually to the movable beam 14, or the fixed side pulley 30 and the wire straightening pulley 40 may be made into a unit and fixed to the movable beam 14. As a method of unitization, for example, the fixed side pulley 30 and the wire straightening pulley 40 are fixed to a plate or frame, and this plate or frame can be fixed to the movable beam 14. The mold 20 may be attached to a plate or frame, or may be attached to the movable beam 14. As the number and position of wires required differs depending on the product, by unitizing the fixed side pulley 30 and the wire straightening pulley 40, it becomes possible to easily switch production by simply replacing the unit for each product.

Hereinafter, for ease of explanation, the side of the fixed side pulley 30 with respect to the mold 20 may be referred to as the upstream side, and the side of the wire straightening pulley 40 as the downstream side.

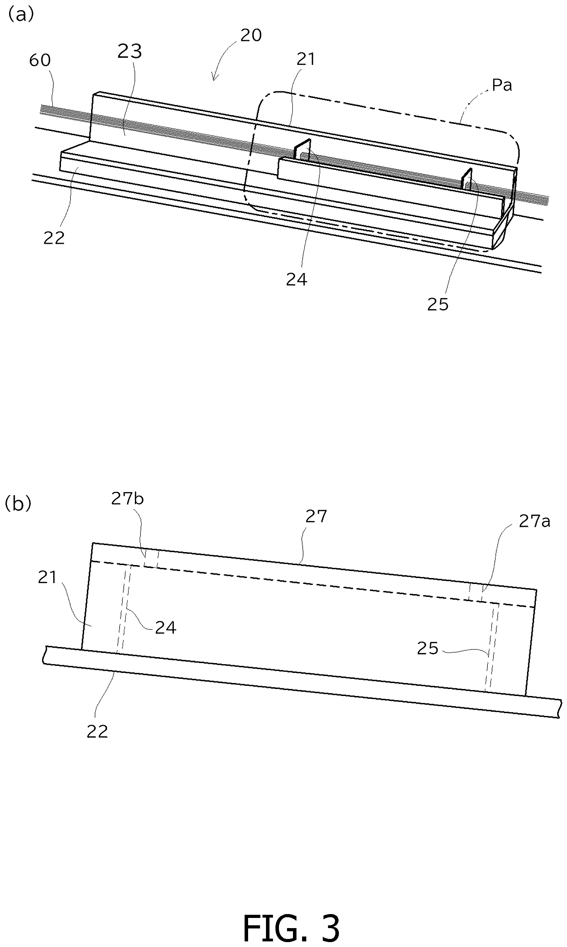

Fig. 3 is an explanatory diagram showing a configuration of a mold.

Fig. 3(a) shows the state where one side wall of the mold 20 has been removed. The mold 20 has a side wall 21 fixed perpendicularly to a bottom surface 22 of a predetermined plate thickness. The two may be molded as a single piece. Two guides 24 and 25 are provided on the inner surface 23 of the side wall 21 perpendicularly to both the side wall 21 and the bottom surface 22. The guides 24 and 25 are members in which a large number of through holes 24h are formed at positions corresponding to the holes of the molded body. The area Pa (shown with space in the figure) enclosed by side wall 21, bottom surface 22, guides 24 and 25, and the side wall opposite to side wall 21 is the space where the slurry is poured to form the molded body.

The wire 60 is placed in a state in which it passes through the guides 24 and 25 and the mold 20.

For ease of explanation, the normal direction to the guides 24 and 25 will be referred to as the axial direction, the normal direction to the bottom surface 22 will be referred to as the height direction, and the direction perpendicular to both, i.e., the normal direction to the side wall 21, will be referred to as the width direction.

Fig. 3(b) is a schematic diagram showing a state in which the lid 27 is attached to both side walls 21. By attaching both side walls and the lid 27 with the wire 60 (not shown) passing through, the area Pa shown in Fig. 3(a) becomes a closed space where the slurry is poured.

The lid 27 is formed with a slurry inlet 27a at the downstream end of the mold 20, i.e., at the bottom of the incline, and with a slurry outlet 27b at the upstream side. A resin pipe may be attached to each of the inlet 27a and the outlet 27b.

With this configuration, the slurry can be poured into the inclined mold 20 from the lower side. It is important that the slurry is poured in such a manner that no cavities are formed in the mold 20 and no air bubbles are formed in the poured slurry. According to the configuration of this embodiment, the generation of cavities and air bubbles can be suppressed by pouring the slurry sufficiently slowly.

When the slurry is poured and the inside of the mold 20 is filled with the slurry, the slurry begins to rise up the pipe attached to the outlet 27b. When this state is reached, the pouring of the slurry is complete.

The pouring of the slurry is stabilized when the liquid level of the slurry in the pipes attached to the inlet 27a and the outlet 27b is balanced. In this embodiment, since the mold 20 is held inclined, it is necessary to ensure that the upper ends of the pipes attached to the inlet 27a and the outlet 27b are sufficiently above the upper end of the mold 20.

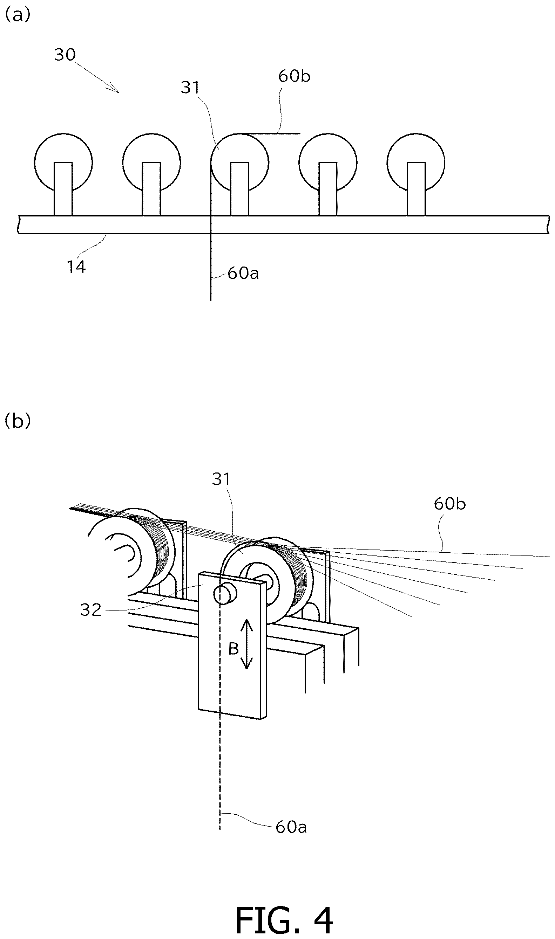

Fig. 4 is an explanatory diagram showing the configuration of a fixed side pulley.

Fig. 4(a) is a schematic diagram showing the configuration of the fixed side pulley 30. The fixed side pulley 30 is fixed to the movable beam 14 of the frame in alignment with the center of the width direction of the mold 20, and multiple pulleys 31 are arranged in the axial direction of the mold 20. The wire 60a coming from below the movable beam 14 is redirected by the pulley 31 toward the mold 20 like the wire 60b. The same applies to pulleys other than those shown in the figure.

Fig. 4(b) shows an enlarged view of the pulley 31. The pulley 31 is axially supported by an adjustment mechanism 32 serving as a first adjustment mechanism. The adjustment mechanism 32 can be any of various mechanisms capable of adjusting the position of the pulley 31 in the height direction B.

By providing the adjustment mechanism 32 in this manner, the height of the pulley 31 can be adjusted, which makes it possible to transport the wire 60 parallel to the bottom surface 22 of the mold 20 relative to the through hole 24h provided in the guide 24 of the mold 20. As a result, interference between the wire 60 and the through hole 24h can be reduced, and the tension due to the weight can be prevented from being hindered by the interference. As a result, the straightness of the wire 60 inside the mold 20 can be maintained.

In this embodiment, the multiple wires 60a coming from below the movable beam 14 are redirected toward the mold 20 like wires 60b by the pulley 31 and spread out into a fan shape, and are attached so as to pass through the through holes arranged in the width direction at the same height in the guide 24. This effect will be described later.

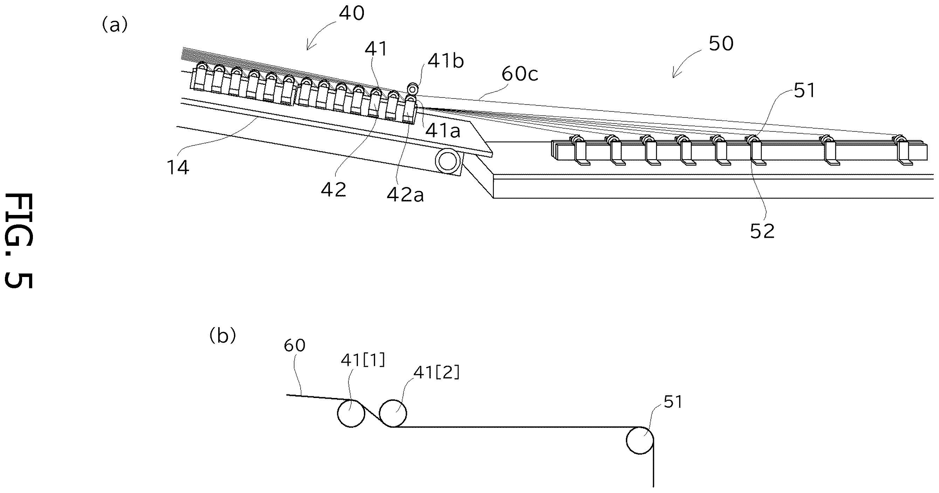

Fig. 5 is an explanatory diagram showing the configuration of a wire straightening pulley and a direction changing pulley.

As shown in Fig. 5(a), a wire straightening pulley 40 and a direction changing pulley 50 are arranged in this order from the upstream side. The wire straightening pulley 40 and the direction changing pulley 50 are fixed in the center of the width direction of the mold 20, similar to the fixed side pulley 30, and multiple pulleys are arranged in the axial direction of the mold 20.

The wire straightening pulley 40 serves the function of maintaining the straightness of the wire 60 within the mold 20 . The direction changing pulley 50 serves to change the direction of the wire 60 downward in order to hang a weight. In this embodiment, a wire straightening pulley 40 and a direction changing pulley 50 are provided with separate functions, which makes it possible to make the position of the wire 60 more stable.

In particular, in this embodiment, the inclination of the mold 20 can be changed together with the movable beam 14, and by fixing the wire straightening pulley 40 to the movable beam 14 together with the mold 20, the straightness of the wire can be easily maintained even if the inclination is changed.

The multiple pulleys 41 provided on the wire straightening pulley 40 are each supported by an adjustment mechanism 42 serving as a first adjustment mechanism, so that their positions in the height direction can be adjusted.

The multiple pulleys 51 provided on the direction changing pulley 50 are also supported by an adjustment mechanism 52 serving as a second adjustment mechanism, making it possible to adjust the position of the pulleys 51 in the normal direction of the frame, which is the height direction relative to the stand.

Fig. 5(b) is a schematic diagram showing a state in which the wire 60 passes through the wire straightening pulley 40 and the direction changing pulley 50. The wire passes over the upstream side pulley 41[1] of the wire straightening pulley 40, passes under the adjacent pulley 41 [2], and then is redirected downward by pulley 51 of the direction changing pulley 50. Therefore, pulley 41[2] serves the function of holding down wire 60 so as to prevent it from coming off pulley 51. At the same time, the pulley 51 serves the function of supporting the wire 60 so as to prevent it from coming off the pulley 41 [2]. In this way, by arranging the axes of pulley 41[2] and pulley 51 on opposite sides of the wire 60, it is possible to stabilize the wire 60.

Regarding the above-mentioned function, for example, if the position of the pulley 51 is lowered, the wire 60 is likely to float away from the pulley 51, and the sufficient effect may not be obtained. In contrast, in this embodiment, the height of the pulley 51 is adjustable by the adjustment mechanism 52, so that such adverse effects can be reduced.

As shown in Fig. 5(a), the pulley 41a at the downstream end has no adjacent pulleys. Therefore, in this embodiment, for this pulley 41a, a pulley 41b is attached to the upper side of the pulley 41a in the same adjustment mechanism 42a, and the wire 60c is passed through the lower side of the pulley 41b. This makes the wire 60c also extend downstream from the wire straightening pulley 40 while passing under the pulley 42b.

According to the molded body manufacturing equipment of this embodiment described above, it is possible to manufacture molded bodies with high precision as described below.

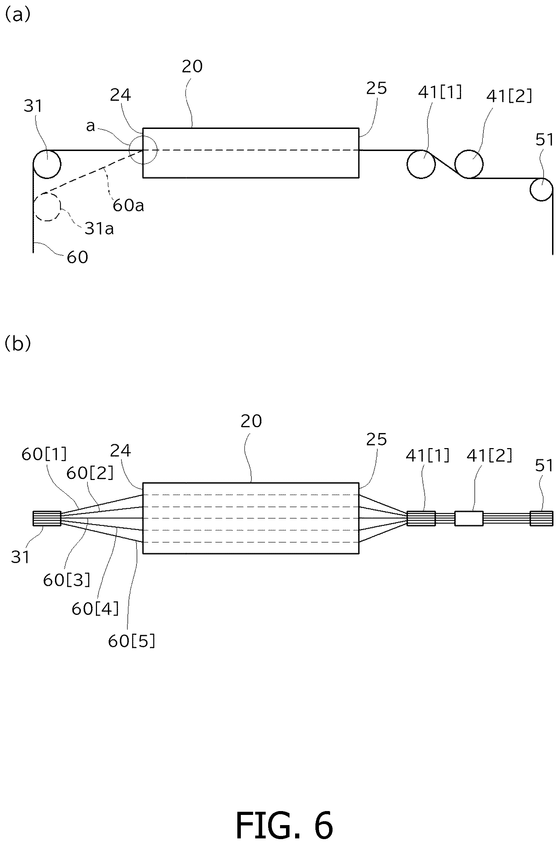

Fig. 6 is an explanatory diagram showing the positional relationship between a pulley and a mold. Fig. 6(a) shows a side view, and Fig. 6(b) shows a top view. Although the mold 20 is held at an incline, Fig. 6(a) is a diagram based on the mold 20, and therefore the mold 20 is drawn horizontally.

As already described, the height positions of the pulley 31 of the fixed side pulley 30 and the wire straightening pulley 40 can be adjusted. Therefore, as shown in Fig. 6(a), the wire 60 can be held parallel to the bottom surface within the mold 20. As a result, interference with the guide 24 in the height direction can be sufficiently suppressed, and the tension applied to the wire 60 can be maintained at an appropriate level.

For example, if the position of pulley 31a relative to mold 20 is too low, wire 60a will enter the guide 24 at an angle, causing interference with guide 24 at entrance portion a. As a result, the tension applied to the wire 60 may be hindered by the guide 24, and the straightness of the wire 60 may not be maintained inside the mold 20. In this embodiment, such a problem can be avoided.

As shown in Fig. 6(b), in this embodiment, multiple wires 60[1] to 60[5] passing through pulleys 31 and 41[1] are spread out like a fan and attached so as to pass through the through holes arranged in the width direction at the same height in guides 24 and 25. As a result, the wires 60[1] to 60[5] will slightly interfere with the guides 24 and 25. However, in this embodiment, tension is applied using a weight, and it has been found that interference between the wire and the through hole in the height direction is likely to have a negative effect on the tension, whereas interference in the width direction does not have much of a negative effect on the tension. In addition, by passing multiple wires through a single pulley 31 and 41[1] in this manner, there is an advantage that variation in the height direction position of these wires can be suppressed.

It is not necessary that all of the various features described in the above embodiments are provided, and some of them may be omitted or combined as appropriate. Furthermore, the present invention is not limited to the above-described embodiment, and various modifications can be made, including the following examples.
(1) Pulley Modifications:
   The pulleys used in the adjustment mechanism may have an outer surface that receives the wire and has an arc-shaped cross section. Although such a cross-sectional shape is acceptable, by providing a groove in this cross section in accordance with the thickness of the wire, it is possible to further prevent the wire from shifting in the width direction. Moreover, instead of the groove, a V-shaped cross section may be used.
(2) Pulley Arrangement Variations:
   As shown in Fig. 6(b), it is possible to form multiple through holes arranged in the width direction by spreading multiple wires out in a fan shape. However, when the width of the molded body is large, simply spreading them out in a fan shape in this manner may not be sufficient. In order to deal with such a case, two or more pulleys 31 and 41 may be provided in parallel in the width direction. This makes it possible to position the wires with high precision even on a wide molded body.

### [Industrial Availability]

The present invention can be used to manufacture a molded body having multiple holes for forming a photonic crystal fiber, or the like. Furthermore, the present invention is not limited to molded bodies for "optical fibers" but can also be used for molded bodies formed using slurries.

### [Reference Signs List]

1 hardened body
2 hole
10 frame
11 fixed beam
12 connecting beam
12h connecting holes
13 support
13a axis
14 movable beam
14a axis
15 wire fixing unit
20 mold
21 wall
21b lid fixing bolt
22 bottom surface
23 inner surface
24, 25 guide
24h through hole
27 lid
27a inlet
27b outlet
28 fixture
30 fixed side pulley
3 1, 31a, 4 1, 41a, 41b pulley
32, 42, 42a, 52 adjustment mechanism
40 wire straightening pulley
50 direction changing pulley
51 pulley
60, 60a, 60b, 60c wire
70 weight

## Claims

1. A molded body manufacturing equipment for manufacturing a molded body comprising:
a frame;
a mold for forming a molded body fixed to the frame;
and a wire holding mechanism that holds a wire passing through the mold,
wherein the mold has a plate-shaped guide attached to a portion corresponding to each end of the molded body and having a through hole for the wire to pass through,
and an inlet for injecting the solution forming the molded body into the mold;
wherein the wire holding mechanism includes
a fixing unit that fixes one end of the wire to the frame, and
a mechanism that hangs a weight from the other end of the wire to apply a predetermined tension to hold the wire in a straight, a mechanism that winds up the other end of the wire to apply a predetermined tension to hold the wire in a straight, or a mechanism that pulls the other end of the wire to apply a predetermined tension to hold the wire in a straight.

2. The molded body manufacturing equipment according to claim 1,
wherein a pulley arranged outside the mold for passing the wire, and
a first adjustment mechanism for adjusting the relative position between the pulley and the mold.

3. The molded body manufacturing equipment according to claim 2,
wherein the first adjustment mechanism is a mechanism for adjusting the relative position between the pulley and the mold in a normal direction to a bottom surface of the mold.

4. The molded body manufacturing equipment according to claim 2 or 3,
wherein sets of the first adjustment mechanism and the pulley are respectively arranged on the outside of both ends of the mold.

5. The molded body manufacturing equipment according to claim 1,
wherein the wire holding mechanism includes
a fixing unit that fixes one end of the wire to the frame, and
a hanging mechanism for applying the tension by hanging a weight on the other end of the wire.

6. The molded body manufacturing equipment according to claim 5,
wherein the hanging mechanism includes
a wire straightening pulley for maintaining the wire in a straight within the mold, and
a direction changing pulley for changing the direction of the wire to a portion from which the weight is hung.

7. The molded body manufacturing equipment according to claim 6,
wherein the direction changing pulley is provided with a second adjustment mechanism for adjusting the relative position with respect to the wire straightening pulley.

8. The molded body manufacturing equipment according to claim 6 or 7,
wherein two or more wire straightening pulleys are provided in the direction in which the wire extends, and the wire passes through the two wire straightening pulleys from the side closest to the mold to the upper side and then to the lower side, before reaching the direction change pulley.

9. The molded body manufacturing equipment according to claim 1,
wherein the frame holds the mold at an incline so that one end is lower and the other end is higher, and
an inlet of the mold is provided at the end held lower.

10. The molded body manufacturing equipment according to claim 9,
wherein an angle of the inclination is 45 degrees or less.
